# FASCICULE DE BREVET EUROPEEN

(11) **EP 2 138 335 B1**
(45) Date de publication et mention de la délivrance du brevet: **23.11.2011**
(21) Numéro de dépôt: 09163204.2
(22) Date de dépôt: 19.06.2009
(51) Int. Cl.: B60H 1/00

(54) **Dispositif de manoeuvre d'un moyen d'obturation d'air pour installation de chauffage, ventilation et/ou climatisation, notamment d'un habitacle de véhicule.**
Steuervorrichtung einer Luftströmungsblende für Heiz-, Lüftungs- und/oder Klimaanlagen, insbesondere eines Fahrzeuginnenraums
Operating device of an air blocking means for a heating-, ventilation- and/or air conditioning unit, in particular of a vehicle compartment

(30) Priorité: 25.06.2008 FR 0803563
(43) Date de publication de la demande: 30.12.2009
(73) Titulaire: Valeo Systèmes Thermiques, 78321 Le Mesnil St Denis Cedex (FR)
(72) Inventeur: Dubois, Christian, 78610 Le Perray en Yvelines (FR)
(74) Mandataire: Léveillé, Christophe

(56) Documents cités:
- EP-A- 1 468 849
- EP-A- 1 719 645
- EP-A- 1 726 460
- DE-A1-102005 047 242
- FR-A- 2 806 041
- US-A1- 2007 243 812

## Description

L'invention est du domaine des installations de chauffage, ventilation et/ou climatisation, et plus particulièrement des dispositifs de manoeuvre d'un moyen d'obturation d'air équipant une telle installation. Elle a pour objet un dispositif de manoeuvre, comprenant un arbre moteur en liaison articulée avec un arbre récepteur afin de provoquer une rotation du moyen d'obturation d'air porté par l'arbre récepteur.

Dans le domaine des installations de chauffage, ventilation et/ou climatisation pour véhicules automobiles, il est connu de telles installations de chauffage, ventilation et/ou de climatisation munie notamment d'un organe de propulsion d'air tel qu'un pulseur, d'un moyen de chauffage, tel qu'un radiateur, et/ou d'un moyen de refroidissement, tel qu'un évaporateur, et de conduits équipés de moyens d'obturation permettant l'ouverture et la fermeture du conduit en assurant ainsi la distribution et l'orientation de l'air traité vers diverses zones d'un habitacle du véhicule, cet air pouvant être chaud ou froid ou à température mixée résultant d'un mélange d'un flux d'air chaud et d'un flux d'air froid en proportion réglable.

Typiquement, ces installations de chauffage, ventilation et/ou climatisation comprennent au moins un moyen d'obturation articulé qui dirige l'air vers le haut de la planche de bord pour la fonction désembuage, un moyen d'obturation articulé qui dirige l'air vers la partie médiane de la planche de bord pour la fonction aération et un moyen d'obturation articulé qui dirige l'air vers le bas de l'habitacle, typiquement les pieds. Ces moyens d'obturation fonctionnent en collaboration selon des lois de distribution définies pour le confort des occupants de l'habitacle du véhicule automobile.

Il est courant d'avoir à manoeuvrer en rotation ces moyens d'obturation placés dans un conduit d'air afin de commander un flux d'air. Un tel moyen d'obturation est notamment agencé en volet, tel qu'un volet du type 'drapeau', un volet du type 'papillon', un volet du type 'tambour', ou autre organe analogue monté pivotant sur un support. Le support peut être un boîtier ou un conduit entrant dans la constitution de l'installation de chauffage, ventilation et/ou climatisation. La rotation du moyen d'obturation ou volet vise, dans une première position extrême, à permettre une circulation et/ou une échappée d'un flux d'air véhiculé par le conduit d'air et dans une deuxième position extrêmes, à interdire la circulation et/ou l'échappée du flux d'air véhiculé par le conduit d'air. Dans des positions intermédiaires, le moyen d'obturation ou volet permet la circulation et/ou l'échappée d'une partie du flux d'air véhiculé par le conduit d'air, la proportion de la partie du flux d'air véhiculé par le conduit d'air étant dépendante du degré d'ouverture du moyen d'obturation ou volet dans le conduit d'air.

Pour manoeuvrer en rotation un tel volet, il est connu de mettre en relation un arbre moteur avec un axe récepteur servant de support du volet par l'intermédiaire d'un ensemble de bielles. Pour limiter l'encombrement du dispositif de manoeuvre, optimiser son exploitation et/ou permettre une régulation conjointe de plusieurs flux d'air circulant à travers divers conduits d'air qui leur sont affectés, il est courant d'exploiter l'arbre moteur pour la manoeuvre d'un ou de plusieurs volets affectés à un conduit d'air respectif, et de relier, par l'ensemble de bielles, l'arbre moteur à l'arbre récepteur. L'arbre récepteur est lui-même apte à supporter un ou plusieurs volets affectés à un ou des conduits d'air respectifs.

Pour de tels agencements, il est impératif de respecter la loi de distribution définie qui coordonne les positions relatives des différents volets supportés par l'arbre moteur et/ou l'arbre récepteur. Notamment, la manoeuvre et les positions relatives des différents volets sont dépendantes de l'agencement du boîtier de l'installation de chauffage, ventilation et/ou climatisation et/ou des différents conduits véhiculant les divers flux d'air. Il est donc recherché d'agencer le dispositif de manoeuvre non seulement de manière à optimiser le nombre de volets à manoeuvrer à partir d'un même dispositif de manoeuvre, mais aussi de manière à manoeuvrer ces différents volets suivant des cinématiques qui leur sont propres et/ou dépendantes les unes des autres selon les conditions souhaitées de traitement de l'air de l'habitacle du véhicule.

En outre, il est souhaitable que les volets placés en position de fermeture, c'est-à-dire dans une position d'obturation complète du conduit d'air qui y est affecté, garantissent une étanchéité parfaite. De plus, il doit aussi être pris en compte une simplification de la structure des dispositifs de manoeuvre en limitant le nombre d'éléments entrant dans leur constitution et leur complexité, pour limiter les coûts d'obtention et de montage sur l'installation de chauffage, ventilation et/ou climatisation.

Il est courant dans le domaine des installations de chauffage, ventilation et/ou climatisation d'utiliser un dispositif de manoeuvre intégrant au moins une came associée à l'ensemble de bielles, la came étant en prise avec l'arbre moteur et en relation avec l'arbre récepteur par l'intermédiaire de l'ensemble de bielles. On pourra par exemple se reporter au document FR2806041 qui décrit un dispositif de manoeuvre d'au moins un volet exploitant une came de manoeuvre et un jeu de bielles.

L'utilisation de cames permet de contrôler rigoureusement le mouvement de rotation d'un ou de plusieurs volets. En outre, la course en rotation du ou des volets est délimitée par le chemin de came, ce qui permet de placer le volet en position de fermeture selon des positions de butée correspondantes aux fins de course du chemin de came, avec pour avantage d'obtenir une étanchéité rigoureuse du volet en position de fermeture.

Cependant, la course en rotation du volet, délimitée par le chemin de came, reste limitée et induit des difficultés propres à l'exploitation et à l'intégration du dispositif de manoeuvre à l'intérieur de l'installation de chauffage, ventilation et/ou climatisation. Cette difficulté est d'autant plus importante que l'étanchéité du volet en position de fermeture est obtenue à partir de la mise en butée de la bielle en relation avec l'arbre moteur, notamment au fond des chemins de came. Il en ressort la nécessité d'une définition rigoureuse du chemin de came, dont l'obtention est difficile et coûteuse, et induit un effet d'hystérésis qui rend la fiabilité et la rigueur de la cinématique du volet délicate.

En outre, l'intégration du dispositif de manoeuvre à l'intérieur de l'installation de chauffage, ventilation et/ou climatisation tend à induire un accroissement de l'encombrement de celle-ci, et notamment d'un boîtier constitutif de l'installation de chauffage, ventilation et/ou climatisation à l'intérieur duquel sont ménagés les conduits d'air, mais également de la chambre de mixage dans laquelle débouchent les conduits d'air. La conception et l'agencement d'un tel boîtier est rendu difficile et coûteux à obtenir, en raison de la mise en correspondance délicate entre les conduits d'air et l'implantation du ou des dispositifs de manoeuvre selon l'emplacement des volets et selon les différentes cinématiques qui leurs sont affectées pour obtenir le traitement d'air souhaité à l'intérieur de l'habitacle du véhicule.

Le but de la présente invention est de proposer un dispositif de manoeuvre pour une installation de chauffage, ventilation et/ou climatisation, notamment d'un habitacle de véhicule. Le dispositif de manoeuvre comprend un arbre moteur en liaison articulée par l'intermédiaire d'au moins une bielle de liaison avec un arbre récepteur porteur d'au moins un premier moyen d'obturation d'air apte à interdire une circulation d'un flux d'air à travers un premier conduit d'air de l'installation dans une position de fermeture et/ou à autoriser une circulation du flux d'air à travers le premier conduit d'air de l'installation dans au moins une position d'ouverture.

Selon la présente invention, l'arbre moteur comprend au moins un coude comportant un doigt d'articulation déporté en liaison en rotation avec la bielle de liaison et définissant un dégagement ménagé sur l'arbre moteur.

Les différents moyens d'obturation d'air que comprend l'installation de chauffage, ventilation et/ou climatisation sont par exemple constitués d'un volet à clapet, d'un volet de type 'drapeau', d'un volet de type 'tambour', d'un volet de type 'papillon' ou de tout autre organe analogue apte à alternativement être manoeuvré entre une ou des positions d'ouverture et une ou des positions de fermeture.

La présente invention intègre un embiellage comprenant au moins trois bielles, dont une bielle motrice en relation avec l'arbre moteur, prolongée de manière articulée par une bielle de liaison en relation avec une bielle réceptrice en association avec l'arbre récepteur. Une ou plusieurs bielles de liaison sont susceptibles d'être interposées entre la bielle motrice et la bielle réceptrice.

Par cet agencement, le dégagement ménagé sur l'arbre moteur permet le passage de la bielle de liaison lors de la rotation de l'arbre moteur sur une plage angulaire donnée, notamment sur 360°.

Selon la présente invention, l'arbre moteur est agencé en vilebrequin comportant le coude et associé au dégagement ménagé en regard du coude sur l'arbre moteur suivant son axe général d'entraînement en rotation. L'agencement en vilebrequin de l'arbre moteur correspond à un décalage radial du coude par rapport à l'axe général d'entraînement en rotation de l'arbre moteur. L'axe d'extension du coude et l'axe d'extension général de l'arbre moteur sont disposés parallèlement l'un par rapport à l'autre.

Ainsi, l'arbre moteur est favorablement entraînée en rotation dans selon un sens unique de rotation.

De préférence, le dispositif de manoeuvre comprend au moins un moyen de limitation de course du premier moyen d'obturation d'air définissant au moins une position d'ouverture et/ou au moins une position de fermeture.

Le moyen de limitation de course peut, par exemple, être affecté à la mobilité de la bielle réceptrice.

L'affectation du moyen de limitation de course à la bielle réceptrice est susceptible de correspondre de manière structurellement à une affectation des moyens de limitation de course au premier organe de distribution sélective d'air et/ou à l'arbre récepteur, voire de tout autre organe solidairement lié en mobilité à la bielle réceptrice.

Par exemple, le moyen de limitation de course comprend au moins un élément de butée placé sur le chemin parcouru par l'arbre récepteur et/ou par le premier moyen d'obturation d'air et/ou par la bielle réceptrice. Un tel élément de butée est notamment porté par un élément structurel de l'installation de chauffage, ventilation et/ou climatisation ménageant le conduit d'air. L'élément structurel peut notamment être un boîtier de traitement de l'air de l'habitacle du véhicule et de distribution de cet air traité vers des zones prédéterminées de l'habitacle, ou encore un conduit d'air constitutif de l'installation.

De plus, le premier moyen d'obturation d'air comporte des moyens d'étanchéité aptes, en position de fermeture, à assurer une fermeture étanche du premier conduit d'air de l'installation.

La fermeture étanche du premier conduit d'air de l'installation est assurée par traction sur la bielle de liaison ou, alternativement, par compression de la bielle de liaison.

Les moyens d'étanchéité sont préférentiellement un organe d'étanchéité souple, tel qu'un joint déformable agencé à la périphérie du premier moyen d'obturation d'air ou analogue, qui est mis en compression sous l'effet de la mise en butée.

Une variante de réalisation prévoit que l'arbre récepteur est avantageusement porteur d'une pluralité de premiers moyens d'obturation d'air respectivement affectés à un conduit d'air. Ces premiers moyens d'obturation d'air sont indifféremment alignés et/ou radialement décalés les uns par rapport aux autres suivant l'axe général d'extension de l'arbre récepteur. Ces premiers moyens d'obturation d'air sont aussi susceptibles d'être orientés les uns par rapport aux autres dans leur plan général suivant des plans indifféremment parallèles et/ou concourants.

L'arbre moteur est avantageusement porteur d'au moins un deuxième moyen d'obturation d'air respectivement affecté à un deuxième conduit d'air. Ce deuxième moyen d'obturation d'air est indifféremment aligné et/ou radialement décalé par rapport au premier moyen d'obturation d'air.

Le coude de l'arbre moteur établit une jonction entre deux tronçons de l'arbre moteur. Le coude de l'arbre moteur est notamment agencé en bielle motrice ayant deux bras solidaires des tronçons de l'arbre moteur. L'axe du coude de l'arbre moteur est formé par le doigt d'articulation.

Selon une variante de réalisation, la bielle motrice est formée par un bras unique porteur du doigt d'articulation et en prise sur le bout correspondant de l'un des tronçons constitutifs de l'arbre moteur. Selon la présente invention, le coude de l'arbre moteur comporte donc au moins un bras sur lequel est agencé le doigt d'articulation.

Selon une autre forme de réalisation de la bielle motrice formant le coude de l'arbre moteur, les bras de la bielle motrice sont formés par des bords en regard de deux deuxièmes moyens d'obturation d'air adjacents. L'axe de la bielle motrice est formé par le doigt d'articulation, ce dernier étant conjointement porté par les bords en regard qui ménagent entre eux le dégagement.

L'entraînement en rotation de la bielle de liaison par le doigt d'articulation est indifféremment obtenue à partir d'un montage tournant du doigt d'articulation auquel est solidarisée la bielle de liaison ou à partir d'une solidarisation du doigt d'articulation sur l'arbre moteur et d'un montage librement tournant de la bielle de liaison autour du doigt d'articulation.

Les axes de mobilité des différentes bielles constitutives de l'embiellage sont avantageusement orientés parallèlement, de sorte que l'encombrement général de l'embiellage est sensiblement contenu dans un même plan général en correspondance avec l'épaisseur des bielles. L'embiellage est apte à être porté indifféremment à l'extérieur ou à l'intérieur d'un élément structurel de l'installation de chauffage, ventilation et/ou climatisation ménageant le ou les conduits d'air.

Les bielles constitutives de l'embiellage sont susceptibles d'être obtenues par moulage d'une matière indifféremment plastique ou métallique.

Selon l'agencement du dispositif de manoeuvre de la présente invention, aucun obstacle n'est placé sur le trajet de la bielle de liaison, notamment un quelconque dispositif à came et/ou l'arbre moteur par exemple, voire encore un deuxième organe de distribution sélective d'air. La bielle de liaison et/ou l'ampleur du décalage radial du coude constitutif de l'agencement de l'arbre moteur en vilebrequin peuvent être aisément adaptés, tant au regard de l'embiellage global qu'au regard de la cinématique recherchée pour la bielle réceptrice.

La faculté offerte de pouvoir manoeuvrer la bielle motrice sur une plage angulaire pouvant s'étendre sur 360° procure aussi une aisance d'adaptation de l'embiellage selon les besoins, et une implantation quelconque des positions relatives de l'arbre moteur et de l'arbre récepteur, de préférence par l'intermédiaire d'au moins une bielle de liaison interposée entre eux. Ces avantages sont en outre obtenus pour un moindre coût d'obtention et d'implantation du dispositif de manoeuvre, et avec un encombrement restreint dont la répercussion sur l'agencement global de l'installation de chauffage, ventilation et/ou climatisation permet de simplifier et d'organiser plus aisément la structure de cette dernière, notamment pour un boîtier de régulation thermique d'air que comporte l'installation.

La faculté d'entraînement en rotation de la bielle motrice sur une plage de 360° autorise sa mise en mouvement suivant un même sens de rotation pour transmettre néanmoins un mouvement de rotation alternatif en débattement de la bielle réceptrice. A partir du mouvement de rotation de la bielle motrice, l'embiellage peut être aisément agencé pour obtenir le débattement souhaité de la bielle réceptrice sur une plage angulaire restreinte, en particulier sur une plage angulaire inférieure à 180°. Ces dispositions permettent d'organiser aisément des cinématiques propres pour les premiers moyens d'obturation d'air et pour les deuxièmes moyens d'obturation d'air respectivement portés par l'arbre récepteur et par l'arbre moteur malgré leur mise en relation par l'intermédiaire de l'embiellage. Ces dispositions permettent aussi de contribuer à un verrouillage étanche aisé du premier moyen d'obturation d'air, à partir d'une exploitation d'un traction ou d'une compression de l'une au moins des bielles constitutives de l'embiellage.

L'agencement du coude que comporte l'arbre moteur est susceptible d'être quelconque et peut donc être aisément adapté selon les besoins et en fonction des positions relatives entre l'arbre moteur, l'embiellage et l'arbre récepteur selon la cinématique souhaitée pour ce dernier et l'emplacement disponible à l'intérieur de l'élément structurel de l'installation. Le coude est apte à être facilement obtenu selon un quelconque décalage radial par rapport à l'axe général de rotation de l'arbre moteur, par intégration ou par apport à ce dernier, ou encore en exploitant d'éventuels organes de distribution sélective d'air portés par l'arbre moteur.

Les modalités de liaison entre la bielle de liaison et la bielle motrice de l'arbre moteur peuvent être aisément réalisées, telles que par emboîtement, par clipage, par l'intermédiaire d'un dispositif à ergot, par brochage ou autre technique analogue de structure simple. De telles modalités de liaison articulée peuvent aussi être exploitées pour la jonction des différentes bielles constitutives de l'embiellage sur leurs différents axes de rotation et/ou de rotation respectifs.

La cinématique obtenue de la bielle de liaison est régulière et évite un effet d'hystérésis sur la transmission du mouvement de rotation de l'arbre moteur vers la bielle réceptrice.

La bielle motrice étant apte à être manoeuvrée sur une plage pouvant s'étendre sur 360°, des moyens de limitation de course du premier moyen d'obturation d'air sont dissociables du mouvement en rotation de l'arbre moteur sur la plage de 360°, et l'embiellage peut être exploité pour l'obtention d'une étanchéité du premier organe de distribution sélective d'air en position de fermeture.

Plus particulièrement, les cinématiques respectives des différentes bielles constitutives de l'embiellage peuvent être prévues comme étant relativement quelconques, c'est-à-dire avec de faibles contraintes de précision. La limitation de course de l'ensemble de ces bielles est obtenue à partir des moyens de butée affectés à l'arbre récepteur et/ou au premier moyen d'obturation d'air pour limiter la course de ce dernier selon ses diverses positions souhaitées.

De telles dispositions présentent un premier avantage de simplification de la structure du dispositif de manoeuvre. En outre, ces dispositions présentent un deuxième avantage relatif à l'étanchéité rigoureuse obtenue du premier moyen d'obturation d'air en position de fermeture. Notamment, les faibles contraintes de précision peuvent être étendues à un léger accroissement de la longueur de l'une au moins des bielles constitutives de l'embiellage. L'étanchéité recherchée du premier moyen d'obturation d'air en position de fermeture est obtenue lors de son application contre les moyens de butée, qui provoque en réaction une mise sous contrainte de l'une au moins des bielles constitutives de l'embiellage, induisant légèrement sa traction ou sa compression et en conséquence un plaquage élastique du premier moyen d'obturation d'air en position de fermeture par l'intermédiaire d'un organe d'étanchéité élastiquement déformable, tel qu'un joint périphérique souple ou analogue, dont il est muni.

La présente invention sera mieux comprise à la lecture de la description qui va en être faite d'exemples de réalisation, en relation avec les figures des planches annexées, dans lesquelles :
- La figure 1 est une illustration en perspective d'un dispositif de manoeuvre selon un premier exemple de réalisation.
- La figure 2 est une vue de dessus d'un arbre moteur constitutif du dispositif de manoeuvre représenté sur la figure 1.
- Les figures 3 et 4 sont des schémas illustrant en perspectives des arbres moteurs constitutifs de dispositifs de manoeuvre de la présente invention, selon respectivement des deuxième et troisième exemples de réalisation.
- Les figures 5 à 8 sont des schémas illustrant successivement un principe de fonctionnement d'un dispositif de manoeuvre selon la présente invention.

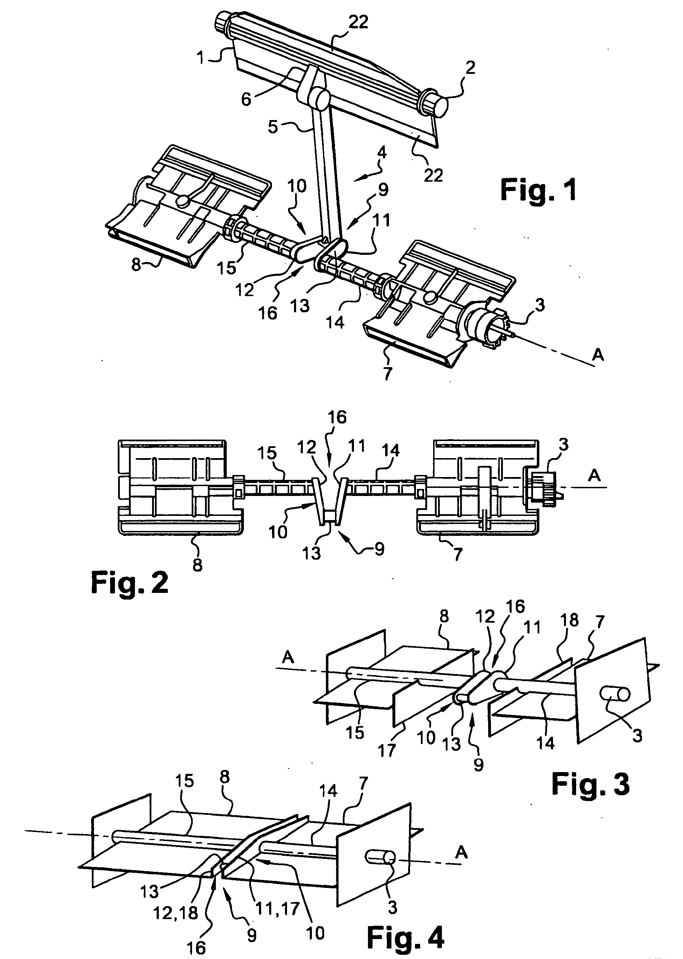

La figure 1 est une vue en perspective d'un dispositif de manoeuvre selon un premier exemple de réalisation. Le dispositif de manoeuvre est agencé pour entraîner en rotation un premier moyen d'obturation d'air 1. Selon le présent exemple de réalisation, le premier moyen d'obturation d'air 1 est constitué par un volet de type 'papillon'. Cet exemple de réalisation n'est en rien limitatif car le premier moyen d'obturation d'air 1 peut également être un volet de type 'drapeau' ou un volet de type 'tambour'. Le premier moyen d'obturation d'air 1 est porté par un arbre récepteur 2. L'arbre récepteur 2 constitue un axe de rotation du premier moyen d'obturation d'air 1.

Le dispositif de manoeuvre est destiné à équiper une installation de chauffage, ventilation et/ou climatisation d'un véhicule. Le dispositif de manoeuvre est placé à l'intérieur d'un boîtier de traitement d'un flux d'air apte à être distribué dans un habitacle du véhicule.

De tels moyens d'obturation d'air sont couramment placés sur un conduit d'air qui leurs sont affectés, et sont manoeuvrables entre une position de fermeture, dans laquelle ils interdisent une circulation d'air à travers le conduit, et une ou plusieurs positions de d'ouverture dans lesquelles le flux d'air circule en tout ou partie dans le conduit d'air. De telles positions d'ouvertures peuvent être des positions d'ouvertures prédéterminées entre les positions extrêmes d'ouverture et de fermeture du moyen d'obturation d'air, ou être des positions d'ouverture intermédiaires entre les deux positions extrêmes d'ouverture et de fermeture.

Sur l'exemple de réalisation illustré en figure 1, le premier moyen d'obturation d'air 1 est unique. Cet exemple n'est pas limitatif. Il est envisageable d'avoir plusieurs premiers moyens d'obturation d'air 1 susceptibles d'être portés par le même arbre récepteur 2 et d'être manoeuvrables à partir du dispositif de manoeuvre.

L'arbre récepteur 2 est apte à être monté articulé sur une structure porteuse de l'installation de chauffage, ventilation et/ou climatisation, tel qu'un boîtier de traitement thermique, de répartition et de distribution, ou encore un conduit d'air auquel est affecté le premier moyen d'obturation d'air 1. Les orientations, les positions, et les dimensions des différents premiers moyens d'obturation d'air 1 sont susceptibles d'être semblables ou différentes de l'un à l'autre entre au moins deux premiers moyens d'obturation d'air 1.

Le dispositif de manoeuvre comprend un arbre moteur 3 et un embiellage 4 interposé entre l'arbre moteur 3 et le premier moyen d'obturation d'air 1.

L'embiellage 4 constitue un dispositif de liaison entre l'arbre moteur 3 et le premier moyen d'obturation d'air 1. Cet embiellage 4 peut être réalisé sous la forme d'un ensemble de bielles reliées entre elles ou, plus simplement, de tringles.

Selon l'exemple de réalisation de la figure 1, l'embiellage 4 comprend au moins une bielle de liaison 5 articulée en rotation par rapport à l'arbre moteur 3 par l'intermédiaire d'une bielle motrice 10. La bielle de liaison 5 est en liaison articulée avec au moins une bielle réceptrice 6 en prise sur le premier moyen d'obturation d'air 1.

Une partie de ces éléments est également visible sur la figure 2 qui présente une vue de dessus de l'arbre moteur 3 entrant dans la réalisation du dispositif de manoeuvre représenté sur la figure 1.

L'arbre moteur 3 est porteur d'au moins un deuxième moyen d'obturation d'air. Selon l'exemple de réalisation décrit à la figure 1, l'arbre moteur 3 comporte deux deuxièmes moyens d'obturation d'air 7 et 8.

Sur les figures 1 à 4, l'arbre moteur 3 est agencé en vilebrequin comportant un coude 9 radialement déporté par rapport à un axe général d'entraînement en rotation A de l'arbre moteur 3 et deux tronçons 14 et 15 disposé de part et d'autre du coude 9.

L'entraînement en rotation de l'arbre moteur 3 est susceptible d'être provoqué par un moyen d'actionnement. Un tel moyen d'entraînement est susceptible d'être un actionneur, par exemple un micromoteur ou un moteur pas à pas, ou un organe mécanique, par exemple un câble de type 'Bowden', ou par tout autre moyen d'entraînement apte à provoquer une rotation sur lui-même de l'arbre moteur 3.

Le coude 9 est formé d'une bielle motrice 10 constituée de deux bras 11 et 12 reliés entre eux par un doigt d'articulation 13. Le doigt d'articulation 13 est donc déporté par rapport à l'axe général d'entraînement en rotation A de l'arbre moteur 3.

Les bras 11 et 12 sont respectivement solidaires des deux tronçons 14 et 15 de l'arbre moteur 3. Les deux bras 11 et 12 reliés par le doigt d'articulation 13 ménagent un dégagement 16 disposé entre les deux tronçons 14 et 15 de l'arbre moteur 3. Le dégagement 16 forme un passage dans lequel la bielle de liaison 5 est apte à circuler lors de son entraînement en rotation par l'arbre moteur 3 sur une plage angulaire, apte à s'étendre sur 360°.

La bielle de liaison 5 est montée tournante autour du doigt d'articulation 13, et grâce au dégagement 16 est apte à être entraînée selon une cinématique déterminée par l'embiellage 4 à partir d'une mise en rotation de l'arbre moteur 3.

La présence du dégagement 16 autorise un entraînement de la bielle de liaison 5 en prise sur le doigt d'articulation 13 sur une plage de rotation pouvant s'étendre sur 360°. La rotation continue de la bielle de liaison 5 est permise malgré sa prise articulée sur l'arbre moteur 3, grâce à son passage autorisé à travers le dégagement 16.

Le mode de réalisation illustrée sur la figure 3 présente une variante du dispositif de manoeuvre du premier exemple de réalisation illustré à la figure 1. Selon cet exemple de réalisation, les deux deuxièmes moyens d'obturation d'air 7 et 8 comporte des bords 17 et 18 respectifs disposés dans des plans perpendiculaires à l'axe général d'entraînement en rotation A de l'arbre moteur 3. Les bords 17 et 18 sont propres à définir une canalisation améliorée du flux d'air guidé respectivement par les deuxièmes moyens d'obturation d'air 7 et 8. Dans cet exemple de réalisation, les bords 17 et 18 des deux deuxièmes moyens d'obturation d'air 7 et 8 sont distincts des bras 11 et 12 de la bielle motrice 10.

Sur la forme de réalisation illustrée sur la figure 4, les bras 11 et 12 de la bielle motrice 10 sont portés par les bords 17 et 18 en regard de deux deuxièmes organes de distribution sélective d'air 7 et 8. Selon cette variante de réalisation, le doigt d'articulation 13 relie l'un à l'autre les bords 17 et 18. Les bords 17 et 18 sont séparés l'un de l'autre d'un écart correspondant au dégagement 16. Cet écart est d'une dimension apte à autoriser le passage de la bielle de liaison 5 lors de son entraînement en rotation par l'arbre moteur 3.

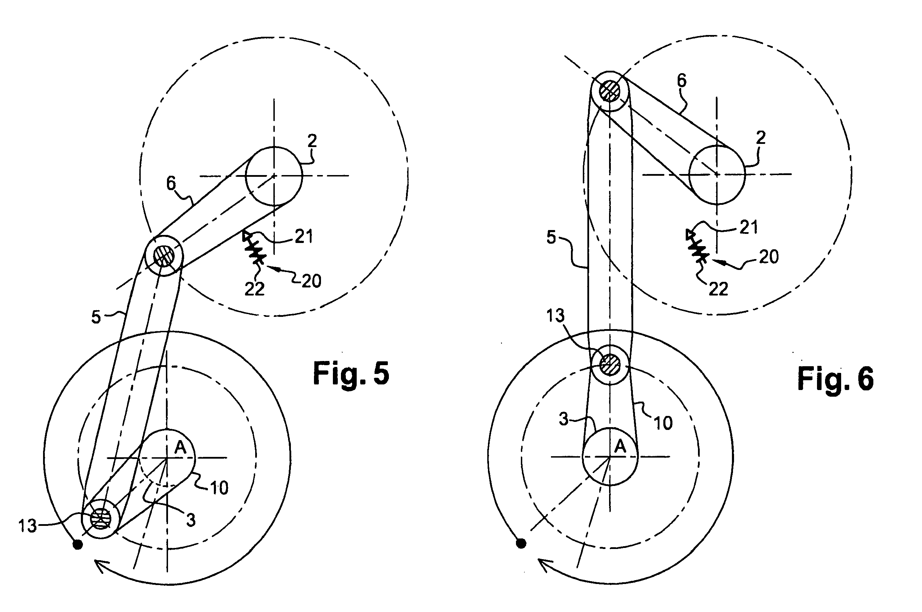

Les figures 5 à 8, l'embiellage 4 comprend la bielle motrice 10, la bielle de liaison 5 et la bielle réceptrice 6. A partir d'une variation des caractéristiques d'agencement de l'embiellage 4, et notamment de la longueur, et/ou des positions relatives des bielles entre elles, une cinématique du premier moyen d'obturation d'air 1 peut être aisément adaptée. Par ailleurs, une modification des caractéristiques d'agencement de l'embiellage 4 permet par une rotation sur lui-même de l'arbre moteur 3 dans une première plage angulaire, pouvant aller jusqu'à une rotation sur 360°, entraînant une rotation sur lui-même de l'arbre récepteur 2 sur une deuxième plage angulaire variable, pouvant aller jusqu'à une rotation sur 360°.

Selon les caractéristiques d'agencement de l'embiellage 4, les première et deuxième plages angulaires peuvent être identiques ou différentes. En particulier, une rotation une rotation de 360° de l'arbre moteur 3 peut établir une rotation sur une plage angulaire définie entre deux positions extrêmes, par exemples espacées d'un angle de 270°. Par ailleurs, il est envisageable d'obtenir un déplacement discontinu de l'arbre récepteur 2 lors d'une rotation continue de l'arbre moteur 3.

La cinématique de commande du premier moyen d'obturation d'air 1 porté par l'arbre récepteur 2 est différente de la cinématique de commande du ou des deuxièmes moyens d'obturation d'air 7 et 8 portés par l'arbre moteur 3. Les différents axes de rotation des bielles étant orientées parallèlement, l'encombrement de l'embiellage 4 et donc de l'ensemble des éléments déterminant la cinématique de commande des différents moyens d'obturation sont sensiblement contenu dans un même plan correspondant à l'épaisseur des bielles. L'embiellage est en conséquence apte à être indifféremment porté à l'intérieur ou avantageusement à l'extérieur de l'élément de structure porteur du dispositif.

Selon une variante de réalisation telle que décrite sur les figures 5 à 8, le dispositif de manoeuvre comprend au moins un moyen de limitation de course 20 du premier moyen d'obturation d'air 1.

Selon une alternatif de réalisation non limitative, le moyen de limitation de course 20 est susceptible d'être formé à partir de la course de la bielle de liaison 5 qui est entraînée par l'arbre moteur 3 et qui induit une course prédéterminée en débattement angulaire de la bielle réceptrice 6 selon une course prédéterminée s'étendant suivant une plage angulaire, notamment inférieure à 180°, entre les positions d'ouverture et de fermeture du premier organe de distribution sélective d'air 1.

Plus particulièrement, le moyen de limitation de course 20 est formé par une définition particulière des caractéristiques d'agencement de l'embiellage 4 à partir de longueurs, de positions relatives et de cinématiques des différentes bielles composant l'embiellage 4.

Selon une autre forme de réalisation, prise isolément ou en combinaison avec la précédente, le moyen de limitation de course 20 est formé par au moins un élément de butée 21 placé sur le chemin parcouru par le premier moyen d'obturation d'air 1. Alternativement ou en complément, l'élément de butée 21 peut être placé sur le chemin parcouru par la bielle réceptrice 6 et/ou par l'arbre récepteur 2.

L'élément de butée 21 est de préférence monté sur un élément structurel de l'installation de chauffage, ventilation et/ou climatisation, tel qu'un boîtier de traitement thermique de l'air de l'habitacle et/ou un conduit de distribution d'air. Un tel montage sur un élément structurel de l'installation de chauffage, ventilation et/ou climatisation permet de définir une position de fin de course par rapport à un référentiel fixe. La position de fin de course correspond à la position dans laquelle l'élément de butée 21 entre en contact avec le premier moyen d'obturation d'air 1 et/ou la bielle réceptrice 6 et/ou l'arbre récepteur 2.

Le moyen de limitation de course 20 est avantageusement associé à des moyens d'étanchéité 22 du premier moyen d'obturation d'air 1. Les moyens d'étanchéité 22 contribuent, notamment en position de fermeture, à assurer la fermeture étanche du conduit d'air dans lequel est disposé le premier moyen d'obturation d'air 1.

Par exemple, l'élément de butée 21 est susceptible d'être associé à un organe élastiquement déformable porté par le premier moyen d'obturation d'air 1, constituant les moyens d'étanchéité 22. Les moyens d'étanchéité 22 sont de telle que sorte que la bielle réceptrice 6 depuis sa position de fermeture en appui contre l'élément de butée 21 induise le placage des moyens d'étanchéité 22 contre, au moins, une paroi du conduit affecté au premier moyen d'obturation d'air 1 correspondant.

L'élément de butée 21 est apte à être structurellement déformable. Il peut être constitué d'un organe souple d'étanchéité compressible lors de la mise en butée du premier moyen d'obturation d'air 1. Alternativement ou en complément, il peut être constitué par des moyens escamotable élastique. Par exemple encore, l'élément de butée 21 peut être combiné avec une déformation l'une au moins des bielles de l'embiellage 4, par exemple par flambage ou par traction sous l'effet d'un effort de la bielle réceptrice 6 en appui contre l'organe de butée 21.

Selon l'exemple de réalisation illustré sur la figure 5, l'embiellage 4 est en position initiale. Cet agencement est tel que la bielle réceptrice 6 est par exemple orientée de sorte que le premier moyen d'obturation d'air 1 est en position de fermeture.

Sur la figure 6, l'arbre moteur 3 est entraîné en rotation dans le sens horaire avec pour conséquence un déplacement de la bielle de liaison 5 et une transmission du mouvement de la bielle de liaison 5 à la bielle réceptrice 6 assurant une rotation dans le sens horaire de l'arbre récepteur 2. Dans cette configuration, le premier moyen d'obturation d'air 1 est en position d'ouverture optimale.

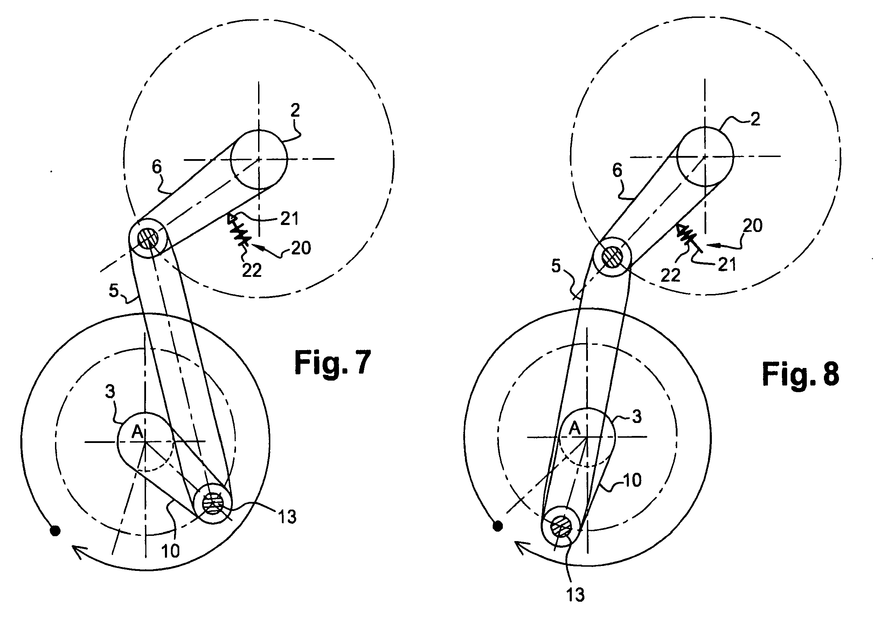

Sur la figure 7, la rotation de l'arbre moteur 3 continue dans le sens horaire et induit par conséquence une rotation dans le sens anti-horaire de la bielle réceptrice 6 et une mise en position initiale de fermeture de l'arbre récepteur 2.

Sur la figure 8, une poursuite de la rotation de l'arbre moteur 3 dans le sens horaire entraîne une mise en contrainte du premier moyen d'obturation d'air 1. Ainsi, la bielle réceptrice 6 poursuit son mouvement de rotation dans le sens anti-horaire sous l'effet de la rotation de la bielle de liaison 5.

Depuis la position dans laquelle le premier moyen d'obturation d'air 1 est en position de fermeture et, par conséquence, que l'élément de butée 21 est en contact avec le premier moyen d'obturation d'air 1 et/ou la bielle réceptrice 6 et/ou l'arbre récepteur 2, la poursuite de la rotation de la bielle réceptrice 6 dans le sens anti-horaire sous l'effet de la rotation de la bielle de liaison 5 entraîne une compression de l'élément de butée 21.

La compression de l'élément de butée 21 peut être accompagné d'une déformation des moyens d'étanchéité 22 contre le conduit d'air dans lequel est disposé le premier moyen d'obturation d'air 1. Il est ainsi assuré une étanchéité parfaite en position de fermeture.

Dans cette variante de réalisation, l'étanchéité est assurée par traction de la bielle de liaison 5 ayant pour conséquence une compression de l'élément de butée 21. Lors de la rotation dans le sens horaire de l'arbre moteur 3, la compression de l'élément de butée 21 est progressif avant d'atteindre un maximum. A partir de cette position, l'élément de butée 21 est progressivement décomprimé.

Dans une variante de réalisation non représentée et selon un autre agencement de l'embiellage 4, l'étanchéité est assurée par compression de la bielle de liaison 5 ayant pour conséquence une compression de l'élément de butée 21. Selon ce mode de réalisation, la rotation dans le sens horaire de l'arbre moteur 3 provoque une compression de la bielle de liaison 5, pouvant éventuellement entraîné le flambage de la bielle de liaison 5.

Dans les deux cas détaillés précédemment, la traction ou la compression de la bielle de liaison 5 assure le verrouillage du premier moyen d'obturation d'air 1 en position de fermeture.

De façon préférentielle, lors d'une manoeuvre souhaitée d'ouverture du premier moyen d'obturation d'air 1, l'arbre moteur 3 est toujours entraîné dans le même sens de rotation, sens horaire selon les positions illustrées sur les figures 5 à 8.

La mise en mouvement de la bielle de liaison 5 suivant un même sens de rotation est avantageuse au regard de la faculté offerte de pouvoir optimiser l'exploitation du dispositif de manoeuvre pour une pluralité de moyens d'obturation d'air, notamment un premier moyen d'obturation d'air 1 et deux deuxièmes moyens d'obturation d'air 7 et 8 respectivement portés par l'arbre récepteur 2 et par l'arbre moteur 3 dans un encombrement réduit et avec une simplicité de structure du dispositif de manoeuvre.

De plus, un tel agencement assure une facilité d'agencement de l'embiellage 4 permettant d'obtenir aisément les cinématiques souhaitées pour le premier moyen d'obturation d'air 1 et les deuxièmes moyens d'obturation d'air 7 et 8 manoeuvrés par le dispositif de manoeuvre, en limitant les effets d'hystérésis.

On comprendra cependant que la mise en mouvement de l'arbre moteur 3 suivant un même sens de rotation n'est pas limitative quant à l'exploitation du dispositif de manoeuvre. En effet, celui-ci est également apte à être indifféremment utilisé selon les besoins avec un entraînement de la bielle de liaison 5 suivant un même sens de rotation ou suivant des sens de rotation alternativement inversés pour entraîner la bielle réceptrice 6 selon une cinématique souhaitée. Cette polyvalence de manoeuvre de la bielle de liaison 5 est obtenue avec des coûts de production et un encombrement qui sont avantageusement réduits, et offre une adaptation optimisée d'intégration du dispositif de manoeuvre à l'intérieur de l'installation de chauffage, ventilation et/ou climatisation en fonction des besoins spécifiques souhaités.

Alternativement, il est possible de disposer deux moyens de limitation de course 20 afin de définir les deux positions extrêmes du premier moyen d'obturation d'air 1.

Par ailleurs, l'arbre moteur 3 est susceptible d'être porteur d'une pluralité de bielles de liaison 5 respectivement affectées à la manoeuvre d'un ou de plusieurs premiers moyens d'obturation d'air 1. Dans ce cas, les embiellages 4 correspondant incluant ces différentes bielles de liaison 5 sont susceptibles d'être librement et indépendamment agencés selon les besoins de manoeuvre du ou des premiers moyens d'obturation d'air 1 auxquels ils sont affectés. Il est ainsi envisageable que l'arbre moteur 3 soit porteur d'un ou de plusieurs coudes 9.

Dans le cadre d'agencements comportant plusieurs premiers moyens d'obturation d'air 1, il est envisageable de disposer divers moyens de limitation de course 20 respectifs pour chaque premier moyen d'obturation d'air 1

De plus, les exemples de réalisations décrits précédemment font intervenir un embiellage constitué par une bielle motrice, une bielle de liaison et une bielle réceptrice. La présente invention couvre également les modes de réalisation faisant intervenir plusieurs bielles de liaison entre la bielle motrice et la bielle réceptrice. De telles dispositions sont particulièrement adaptées à des agencements de moyens d'obturation d'air distants les uns des autres et/ou dans le cadre de lois cinématiques complexes nécessitant des mouvements particuliers d'un des moyens d'obturation d'air par rapport aux autres moyens d'obturation d'air.

Selon des alternatives de réalisation, les caractéristiques d'agencement de l'embiellage permettent que l'arbre moteur, étant en rotation dans un sens unique, puisse transmettre au moyen de la bielle de liaison un mouvement de rotation alternatif en débattement à la bielle réceptrice. Le dégagement autorise une telle rotation à sens unique de la bielle motrice apte à transmettre à la bielle de liaison un mouvement de rotation entraînant la bielle réceptrice selon le mouvement de rotation alternatif.

De plus, les dispositifs de manoeuvre pour une installation de chauffage, ventilation et/ou climatisation dans lesquels l'arbre moteur est entraîné dans le sens horaire et le sens anti-horaire font également partie de la présente invention.

Bien évidemment, l'invention n'est pas limitée aux modes de réalisation détaillés ci-dessus et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Dispositif de manoeuvre pour une installation de chauffage, ventilation et/ou climatisation, notamment d'un habitacle de véhicule, comprenant au moins un arbre moteur (3) en liaison articulée par l'intermédiaire d'au moins une bielle de liaison (5) avec au moins un arbre récepteur (2) porteur d'au moins un premier moyen d'obturation d'air (1) apte à interdire une circulation d'un flux d'air à travers un premier conduit d'air de l'installation dans une position de fermeture et/ou à autoriser une circulation du flux d'air à travers le premier conduit d'air de l'installation dans au moins une position d'ouverture,
**caractérisé en ce que** l'arbre moteur (3) comprend au moins un coude (9) comportant un doigt d'articulation (13) déporté en liaison en rotation avec la bielle de liaison (5) et définissant un dégagement (16) ménagé sur l'arbre moteur (3)

2. Dispositif de manoeuvre selon la revendication 1, **caractérisé en ce que** le dégagement (16) ménagé sur l'arbre moteur (3) permet le passage de la bielle de liaison (5) lors de la rotation de l'arbre moteur (3) sur une plage angulaire donnée.

3. Dispositif de manoeuvre selon la revendication 2, **caractérisé en ce que** la plage angulaire donnée de rotation de l'arbre moteur (3) s'étend sur 360°.

4. Dispositif de manoeuvre selon l'une quelconque des revendications 1 à 3, **caractérisé en ce que** l'arbre moteur (3) est entraînée en rotation dans un sens unique de rotation.

5. Dispositif de manoeuvre selon l'une quelconque des revendications précédentes, **caractérisé en ce que** le dispositif de manoeuvre comprend au moins un moyen de limitation de course (20) du premier moyen d'obturation d'air (1) définissant au moins une position d'ouverture et/ou au moins une position de fermeture.

6. Dispositif de manoeuvre selon la revendication 5, **caractérisé en ce que** le moyen de limitation de course (20) comprend au moins un élément de butée (21) placé sur le chemin parcouru par l'arbre récepteur (2) et/ou par le premier moyen d'obturation d'air (1) et/ou par la bielle réceptrice (6).

7. Dispositif de manoeuvre selon la revendication 5 ou 6, **caractérisé en ce que** l'élément de butée (21) est porté par un élément structurel de l'installation de chauffage, ventilation et/ou climatisation ménageant le premier conduit d'air.

8. Dispositif de manoeuvre selon l'une quelconque des revendications précédentes, **caractérisé en ce que** le premier moyen d'obturation d'air (1) comporte des moyens d'étanchéité (22) aptes, en position de fermeture, à assurer une fermeture étanche du premier conduit d'air de l'installation.

9. Dispositif de manoeuvre selon la revendication 8, **caractérisé en ce que** la fermeture étanche du premier conduit d'air de l'installation est assurée par traction sur la bielle de liaison (5).

10. Dispositif de manoeuvre selon la revendication 8, **caractérisé en ce que** la fermeture étanche du premier conduit d'air de l'installation est assurée par compression de la bielle de liaison (5).

11. Dispositif de manoeuvre selon l'une quelconque des revendications précédentes, **caractérisé en ce que** l'arbre moteur (3) est porteur d'au moins un deuxième moyen d'obturation d'air (7,8) affecté à un deuxième conduit d'air.

12. Dispositif de manoeuvre selon l'une quelconque des revendications précédentes, **caractérisé en ce que** le coude (9) de l'arbre moteur (3) établit une jonction entre deux tronçons (14,15) de l'arbre moteur (3).

13. Dispositif de manoeuvre selon la revendication 12 , **caractérisé en ce que** le coude (9) comporte une bielle motrice (10) ayant deux bras (11,12) solidaires des tronçons (14,15) de l'arbre moteur (3).

14. Dispositif de manoeuvre selon l'une quelconque des revendications 11 à 13, **caractérisé en ce que** le deuxième moyen d'obturation d'air (7,8) comprend deux bords (17,18) disposés de part et d'autre du coude (9) dans des plans respectifs perpendiculaires à l'axe général d'entraînement en rotation A de l'arbre moteur 3.

15. Dispositif de manoeuvre selon la revendication 14, **caractérisé en ce que** les deux bras (11,12) de la bielle motrice (10) sont portés respectivement par les deux bords (17, 18).

## Claims

1. Device for manoeuvring for a heating, ventilation and/or air-conditioning installation, in particular a vehicle passenger compartment, comprising at least one drive shaft (3) in articulated connection by the intermediary of at least one connecting rod (5) with at least one driven shaft (2) bearing at least one first air blocking unit (1) able to prevent a circulation of air flow through a first air duct of the installation in a closing position and/or authorise a circulation of air flow through the first air duct of the installation in at least one opening position,
**characterised in that** the drive shaft (3) comprises at least one elbow (9) comprising an articulation finger (13) depressed in rotation connection with the connecting rod (5) and defining a clearance (16) provided on the drive shaft (3).

2. Device for manoeuvring according to claim 1, **characterised in that** the clearance (16) provided on the drive shaft (3) authorises the passage of the connecting rod (5) during the rotation of the drive shaft (3) over a given angular range.

3. Device for manoeuvring according to claim 2, **characterised in that** the given angular range of the drive shaft (3) extends over 360°.

4. Device for manoeuvring according to any of claims 1 to 3, **characterised in that** the drive shaft (3) is driven in rotation in a single direction of rotation.

5. Device for manoeuvring as claimed in any preceding claim, **characterised in that** the device for manoeuvring comprises at least one means for limiting the travel (20) of the first air blocking unit (1) defining at least one opening position and/or at least one closing position.

6. Device for manoeuvring according to claim 5, **characterised in that** the means for limiting travel (20) comprise at least one stop element (21) placed on the path travelled by the driven shaft (2) and/or by the first air blocking unit (1) and/or by the driven rod (6).

7. Device for manoeuvring according to claim 5 or 6, **characterised in that** the stop element (21) is borne by a structural element of the heating, ventilation and/or air-conditioning installation maintaining the first air duct.

8. Device for manoeuvring as claimed in any preceding claim, **characterised in that** the first air blocking unit (1) comprises means for sealing (22) able, in a closing position, to provide a sealed closing of the first air duct of the installation.

9. Device for manoeuvring according to claim 8, **characterised in that** the sealed closing of the first air duct of the installation is provided via traction on the connecting rod (5).

10. Device for manoeuvring according to claim 8, **characterised in that** the sealed closing of the first air duct of the installation is provided by compression of the connecting rod (5).

11. Device for manoeuvring as claimed in any preceding claim, **characterised in that** the drive shaft (3) bears at least one second air blocking unit (7, 8) allocated to a second air duct.

12. Device for manoeuvring as claimed in any preceding claim, **characterised in that** the elbow (9) of the drive shaft (3) established a connection between two sections (14, 15) of the drive shaft (3).

13. Device for manoeuvring according to claim 12, **characterised in that** the elbow (9) comprises a drive rod (10) with two arms (11, 12) integrals with the sections (14, 15) of the drive shaft (3).

14. Device for manoeuvring according to any of claims 11 to 13, **characterised in that** the second air blocking unit (7, 8) comprises two edges (17, 18) arranged on either side of the elbow (9) in respective planes that are perpendicular to the general drive axis in rotation A of the drive shaft 3.

15. Device for manoeuvring according to claim 14, **characterised in that** the two arms (11, 12) of the drive rod (10) are borne respectively by the two edges (17, 18).

## Patentansprüche

1. Steuervorrichtung für eine Heiz-, Lüftungs- und/oder Klimaanlage, insbesondere eines Fahrzeuginnenraums, umfassend mindestens eine Antriebswelle (3) in Gelenkverbindung über mindestens eine Verbindungsstange (5) mit mindestens einer Abtriebswelle (2), die mindestens eine erste Luftströmungsblende (1) trägt, dazu geeignet, den Umlauf eines Luftstroms durch einen ersten Luftkanal der Anlage in einer Verschlussposition zu verhindern und/oder den Umlauf eines Luftstroms durch den ersten Luftkanal der Anlage in mindestens einer Öffnungsposition zu ermöglichen,
**dadurch gekennzeichnet, dass** die Antriebswelle (3) mindestens ein Kniestück (9), umfassend einen Gelenkfinger (13), der in Drehverbindung mit der Verbindungsstange (5) verschoben wird, umfasst und einen Freiraum (16), angebracht auf der Antriebswelle (3), definiert.

2. Steuervorrichtung nach Anspruch 1, **dadurch gekennzeichnet, dass** der Freiraum (16), angebracht auf der Antriebswelle (3), den Durchgang der Verbindungsstange (5) bei der Drehung der Antriebswelle (3) auf einem gegebenen Winkelbereich ermöglicht.

3. Steuervorrichtung nach Anspruch 2, **dadurch gekennzeichnet, dass** sich der gegebene Winkelbereich der Drehung der Antriebswelle (3) über 360° erstreckt.

4. Steuervorrichtung nach einem der Ansprüche 1 bis 3, **dadurch gekennzeichnet, dass** die Antriebswelle (3) in einer einzigen Drehrichtung zum Drehen gebracht wird.

5. Steuervorrichtung nach einem der vorhergehenden Ansprüche, **dadurch gekennzeichnet, dass** die Steuervorrichtung mindestens ein Mittel zur Begrenzung des Weges (20) der ersten Luftströmungsblende (1) umfasst, umfassend mindestens eine Öffnungsposition und/oder mindestens eine Verschlussposition.

6. Steuervorrichtung nach Anspruch 5, **dadurch gekennzeichnet, dass** das Mittel zur Begrenzung des Weges (20) mindestens ein Anschlagelement (21) umfasst, das auf dem Weg, zurückgelegt von der Abtriebswelle (2) und/oder von der ersten Luftströmungsblende (1) und/oder von der Empfängerstange (6) angebracht ist.

7. Steuervorrichtung nach Anspruch 5 oder 6, **dadurch gekennzeichnet, dass** das Anschlagelement (21) von einem strukturellen Element der Heiz-, Lüftungs- und/oder Klimaanlage getragen wird, das den ersten Luftkanal aufnimmt.

8. Steuervorrichtung nach einem der vorhergehenden Ansprüche, **dadurch gekennzeichnet, dass** die erste Luftströmungsblende (1) Dichtigkeitsmittel (22) umfasst, geeignet, um in der Verschlussposition einen dichten Verschluss des ersten Luftkanals der Anlage sicherzustellen.

9. Steuervorrichtung nach Anspruch 8, **dadurch gekennzeichnet, dass** der dichte Verschluss des ersten Luftkanals der Anlage durch Zugkraft auf der Verbindungsstange (5) sichergestellt wird.

10. Steuervorrichtung nach Anspruch 8, **dadurch gekennzeichnet, dass** der dichte Verschluss des ersten Luftkanals der Anlage durch Kompression der Verbindungsstange (5) sichergestellt wird.

11. Steuervorrichtung nach einem der vorhergehenden Ansprüche, **dadurch gekennzeichnet, dass** die Antriebswelle (3) Träger von mindestens einer zweiten Luftströmungsblende (7, 8) ist, zugewiesen einem zweiten Luftkanal.

12. Steuervorrichtung nach einem der vorhergehenden Ansprüche, **dadurch gekennzeichnet, dass** das Kniestück (9) der Antriebswelle (3) eine Verbindung zwischen zwei Abschnitten (14, 15) der Antriebswelle (3) festsetzt.

13. Steuervorrichtung nach Anspruch 12, **dadurch gekennzeichnet, dass** das Kniestück (9) eine Treibstange (10) mit zwei Armen (11, 12) umfasst, die einstückig mit den Abschnitten (14, 15) der Antriebswelle (3) sind.

14. Steuervorrichtung nach einem der Ansprüche 11 bis 13, **dadurch gekennzeichnet, dass** die zweite Luftströmungsblende (7, 8) zwei Ränder (17, 18) umfasst, die auf beiden Seiten des Kniestücks (9) auf entsprechenden Ebenen angeordnet sind, die senkrecht zur allgemeinen Antriebsachse A des Antriebswelle (3) sind.

15. Steuervorrichtung nach Anspruch 14, **dadurch gekennzeichnet, dass** die zwei Arme (11, 12) der Treibstange (10) jeweils von den zwei Rändern (17, 18) getragen werden.
